# FASCICULE DE BREVET EUROPEEN

(11) **EP 1 729 360 B1**
(45) Date de publication et mention de la délivrance du brevet: **29.07.2009**
(21) Numéro de dépôt: 06290869.4
(22) Date de dépôt: 30.05.2006
(51) Int. Cl.: H01M 2/16, H01M 10/44, C08F 255/02, C08F 220/06, D06M 14/28, H01M 4/38, H01M 10/30

(54) **Accumulateur alcalin ouvert comportant une membrane microporeuse**
Alkalischer offener Akkumulator umfassend eine mikroporöse Membrane
Alkaline open battery comprising a microporous membrane

(30) Priorité: 02.06.2005 FR 0505586
(43) Date de publication de la demande: 06.12.2006
(73) Titulaire: SAFT GROUPE SA, 93170 Bagnolet (FR)
(72) Inventeur: Caillon, Georges, 33520 Bruges (BE); Crochepierre, Bernard, 33160 Saint Medard-en-Jalles (FR)
(74) Mandataire: Hirsch & Associés

(56) Documents cités:
- WO-A-01/09209
- WO-A-01/34388
- WO-A-93/01622
- WO-A-03/026037
- WO-A2-20/04078808
- DE-B3-5102004 045 09
- FR-A- 2 399 134
- US-A- 5 830 604
- US-B1- 6 436 581
- PATENT ABSTRACTS OF JAPAN vol. 009, no. 099 (E-311), 27 avril 1985 (1985-04-27) & JP 59 224051 A (SANYO ELECTRIC CO. LTD.), 15 décembre 1984 (1984-12-15)
- PATENT ABSTRACTS OF JAPAN vol. 006, no. 064 (E-103), 23 avril 1982 (1982-04-23) & JP 57 007061 A (HITACHI MAXELL LTD.), 14 janvier 1982 (1982-01-14)
- PATENT ABSTRACTS OF JAPAN vol. 006, no. 047 (E-099), 26 mars 1982 (1982-03-26) & JP 56 160762 A (TOSHIBA BATTERY CO. LTD.), 10 décembre 1981 (1981-12-10)
- PATENT ABSTRACTS OF JAPAN vol. 006, no. 042 (E-098), 16 mars 1982 (1982-03-16) & JP 56 159056 A (YUASA BATTERY CO. LTD.), 8 décembre 1981 (1981-12-08)
- KRITZER P.: "Separators for nickel metal hydride and nickel cadmium batteries designed to reduce self-discharge rates" JOURNAL OF POWER SOURCES, vol. 137, no. 2, 29 octobre 2004 (2004-10-29), pages 317-321, XP004610238 ISSN: 0378-7753
- CHOI S.H. ET AL.: "Electrochemical properties of polyolefin nonwoven fabric modified with carboxylic acid group for battery separator" RADIATION PHYSICS AND CHEMISTRY, vol. 60, no. 4-5, 2001, pages 495-502, XP004232451 ISSN: 0969-806X
- PATENT ABSTRACTS OF JAPAN vol. 1998, no. 10, 31 août 1998 (1998-08-31) & JP 10 125300 A (JAPAN STORAGE BATTERY CO. LTD.), 15 mai 1998 (1998-05-15)

## Description

### DOMAINE TECHNIQUE

La présente invention concerne un accumulateur alcalin ouvert offrant une sécurité accrue en cas d'utilisation en charge sous une tension constante et possédant une plus longue durée de vie.

### ETAT DE LA TECHNIQUE

Un accumulateur alcalin ouvert de type nickel cadmium ou nickel métal hydrure comprend de façon classique :
- une ou plusieurs électrodes positives dont la matière active est le plus souvent constituée d'un hydroxyde à base de nickel Ni(OH)₂,
- une ou plusieurs électrodes négatives dont la matière active est constituée de cadmium dans le cas d'un accumulateur nickel-cadmium ou d'un métal hydrurable dans le cas d'un accumulateur nickel-métal hydrure,
- un séparateur placé entre chaque électrode positive et négative, et
- un électrolyte qui est une solution alcaline plusieurs fois molaire d'une base forte ou d'un mélange de bases fortes telles que NaOH, KOH ou LiOH.

Le séparateur est un isolant électrique ; il empêche le contact électrique entre une électrode positive et une électrode négative. Il présente une certaine porosité (microporosité) pour permettre aux ions de l'électrolyte de le traverser.

L'accumulateur est dit "ouvert" quand le boîtier de l'accumulateur n'est pas fermé de façon étanche et que la pression des gaz dans l'accumulateur est égale à la pression atmosphérique, par opposition à un accumulateur dit "étanche". Dans un accumulateur alcalin "étanche", l'électrode négative est surcapacitive. Quand l'électrode positive est complètement chargée, le courant de surcharge y provoque la formation d'oxygène. L'oxygène ainsi formé ne peut pas s'échapper librement de l'accumulateur. II diffuse par voie gazeuse vers la plaque négative où il se réduit. L'électrode négative étant surcapacitive, il est possible de surcharger l'accumulateur étanche pourvu que sa pression interne reste suffisamment faible.

La charge sous tension constante d'un accumulateur alcalin ouvert, sans dispositif de limitation du courant de charge en fin de charge, n'est pas recommandée. En effet, le mode de charge à tension constante peut conduire à un emballement thermique de l'accumulateur et à sa destruction. Sans vouloir être lié par la théorie, la demanderesse pense que le mécanisme conduisant à cet emballement est le suivant. Lorsque l'accumulateur approche de la fin de la charge et que les matières actives positives et négatives sont pratiquement complètement chargées, une fraction du courant de charge est utilisée pour former de l'oxygène à l'électrode positive. L'oxygène produit à l'électrode positive se dissout dans l'électrolyte et migre à travers le séparateur vers l'électrode négative où il se réduit. Le courant produit par la réduction de l'oxygène provoque une hausse de température de l'accumulateur. Cette hausse de température provoque une diminution de sa résistance interne, une diminution du surpotentiel de dégagement d'oxygène à l'électrode positive et une diminution de la force électromotrice de l'accumulateur car le coefficient de température du potentiel en circuit ouvert d'un accumulateur alcalin est négatif. Ces trois facteurs concomitants ont pour effet de faire baisser le potentiel de l'accumulateur et donc d'augmenter le courant de charge car le potentiel appliqué aux bornes de l'accumulateur est constant. L'augmentation du courant de charge contribue encore plus à l'augmentation de température et l'emballement thermique est ainsi activé.

Afin d'assurer un bon fonctionnement de l'accumulateur alcalin ouvert, en charge à tension constante, le séparateur devrait faire barrière à l'oxygène gazeux.

Les séparateurs utilisés jusqu'à présent sont des films de type tissé ou non-tissé, microporeux ou dense et peuvent être en nylon (polyamide), en cellophane, en polypropylène ou en polyéthylène. Certains de ces films, généralement très fins comparés aux autres utilisés, peuvent présenter à l'état initial une propriété de barrière à l'oxygène. On les appelle alors des membranes. Ces membranes peuvent présenter l'inconvénient de se dégrader au cours du temps et de perdre progressivement leur effet de barrière à l'oxygène. La dégradation du séparateur est un facteur important du vieillissement de l'accumulateur alcalin. Cette dégradation est d'autant plus rapide que l'accumulateur est utilisé à des températures relativement élevées, par exemple supérieures à 40°C.

On recherche donc un accumulateur alcalin ouvert dont le séparateur conserve sa propriété de barrière à l'oxygène, pour une température de fonctionnement supérieure à 40°C.

Le document DE-B-10 2004 045 095 décrit un accumulateur au plomb-acide comprenant une alternance d'anodes et de cathodes séparées par un séparateur de polyéthylène microporeux. Ce séparateur présente sur chacune de ses surfaces une couche fibreuse.

Le document JP 59-224051 décrit un séparateur laminé pour accumulateur alcalin, consistant en un film de polyéthylène ou de polypropylène greffé par de l'acide acrylique et un tissu tissé ou non-tissé constitué de fibres de cellulose, de fibres vinylon® ou encore un mélange de ces fibres.

Le document JP 57-007061 décrit un accumulateur étanche de type argent comprenant une électrode positive à base d'oxyde d'argent, une électrode négative à base de zinc amalgamé, séparées par un séparateur laminé comprenant au moins deux films de polyoléfine greffée par de l'acide (méth)acrylique, sur lesquels est superposé un papier mixte de vinylon®-rayon®ou un tissu non-tissé de rayon®.

Le document JP 56-160762 décrit un accumulateur étanche alcalin comprenant une électrode positive à base d'oxyde d'argent, une électrode négative à base de poudre de zinc, séparées par un séparateur formé par laminage d'un film de polyéthylène greffé par de l'acide (méth)acrylique avec un tissu non-tissé contenant principalement du nylon, du polypropylène, du chlorure de vinyle ou du chlorure de vinylidène.

Le document JP 56-159056 décrit un accumulateur étanche alcalin comprenant une électrode positive au peroxyde d'argent, une électrode négative comprenant du zinc amalgamé, séparées par un séparateur combiné constitué d'un film poreux tel que le polyéthylène greffé par de l'acide (méth)acrylique, et d'un tissu non-tissé de polypropylène.

Le document WO 03/026037 décrit un séparateur pour accumulateur plomb-acide, comprenant au moins comprenant une couche de polyoléfine microporeuse et de part et d'autre de cette couche, au moins une couche de structure fibreuse.

La publication Journal of Power Sources 137 (2004) 317-321 intitulée « Separators for nickel metal hydride and nickel cadmium batteries designed to reduce self-discharge rates » décrit des séparateurs non-tissés pour usage dans un accumulateur de type nickel-métal hydrure et nickel-cadmium. Ces séparateurs sont capables de piéger les composés azotés responsables de l'autodécharge de ces accumulateurs. Il y est décrit des séparateurs de polyoléfine greffés par de l'acide acrylique.

Le document US 6 436 581 décrit un accumulateur alcalin comprenant un séparateur constitué de fibres de polyoléfine greffées par un monomère vinylique, tel que l'acide (méth)acrylique.

Le document WO 01/34388 décrit un accumulateur alcalin de type nickel métal hydrure comprenant un séparateur constitué d'un tissu non-tissé de fibres de polyoléfine greffées par de l'acide acrylique. Il est dit que ce séparateur possède une capacité accrue d'absorption des composés ammoniaqués responsables de l'autodécharge de l'accumulateur.

La publication Radiation Physics and Chemistry 60 (2001) 495-502 intitulée « Electrochemical properties of polyolefin nonwoven fabric modified with carboxylic acid group for battery separator » décrit les propriétés électrochimiques de tissues non-tissés à base de polyoléfine modifiée par greffage d'acides carboxyliques et leur utilisaton comme séparateur de batterie.

Les documents US 5 830 604 et WO 93/01622 décrivent l'utilisation d'un séparateur constitué d'une polyoléfine greffée par de l'acide acrylique dans un accumulateur alcalin.

Le document JP 10-125300 décrit un séparateur pour accumulateur alcalin constitué d'un tissu non tissé de fibres de polyoléfine greffées par de l'acide acrylique par une technique d'irradiation aux ultra-violets.

Le document FR-A-2 399 134 décrit un procédé de préparation d'un séparateur pour accumulateur alcalin comprenant l'étape de mise en contact d'une pellicule de polyéthylène avec une solution comprenant de l'acide acrylique puis à irradier d'un rayonnement ionisant.

Le document WO 2004/078808 décrit un procédé de préparation d'un polymère d'alcool polyvinylique à greffage de polymère oléfinique, selon lequel un polymère oléfinique est initialement traité avec un amorceur de polymérisation radicalaire, un matériau polymère oléfinique peroxydé ou un rayonnement ionisant, puis subit un greffage par un monomère d'ester vinylique pour former un polymère d'ester polyvinylique à greffage de polymère oléfinique, et enfin les fractions d'ester vinylique dans le polymère greffé obtenu sont converties en fractions d'alcool vinylique. Le polymère d'alcool polyvinylique à greffage de polymère oléfinique est décrit comme possédant des propriétés de barrière à l'oxygène améliorées.

Le document WO 01/09209 décrit un procédé de préparation d'un copolymère greffé contenant du fluor constitué d'un squelette d'un matériau de polyoléfine auquel est greffé par polymérisation a) au moins un monomère fluoré gazeux tel que le fluorure de vinylidène, b) au moins un acide ou un ester acrylique fluoré, c) un mélange de a) et b) ou d) un mélange de a) et/ou b) et un monomère non fluoré comme le méthacrylate de méthyle. Les copolymères obtenus sont décrits comme présentant, entre autres, des propriétés de barrière à l'oxygène améliorées.

### RESUME DE L'INVENTION

A cet effet, l'invention propose un accumulateur ouvert de type nickel cadmium ou nickel métal hydrure comprenant au moins une électrode positive, au moins une électrode négative et au moins un séparateur, ledit séparateur comprenant une membrane microporeuse de polyoléfine, greffée par un monomère à insaturation éthylénique, et de part et d'autre de ladite membrane, au moins une couche de polyoléfine de structure fibreuse. L'accumulateur selon l'invention présente un risque amoindri d'emballement thermique et une plus longue durée de vie.

L'invention réside dans la découverte que l'utilisation d'une membrane microporeuse de polyoléfine, greffée par un monomère à insaturation éthylénique, et de part et d'autre de ladite membrane, au moins une couche de polyoléfine de structure fibreuse dans un accumulateur ouvert à électrolyte aqueux de type nickel cadmium ou métal hydrure, permet de faire barrière à l'oxygène gazeux.

Il est également décrit un procédé de charge à tension constante d'un accumulateur ouvert de type nickel cadmium ou nickel métal hydrure comprenant au moins une électrode positive, au moins une électrode négative et au moins un séparateur comprenant une membrane microporeuse de polyoléfine, greffée par un monomère à insaturation éthylénique, et de part et d'autre de ladite membrane, au moins une couche de polyoléfine de structure fibreuse.

### BREVE DESCRIPTION DES FIGURES

La figure 1 représente une vue en coupe transversale d'un accumulateur alcalin ouvert selon l'invention.

La figure 2 représente le courant de charge d'accumulateurs alcalins ouverts en fonction de la durée de la charge à tension constante exprimée en nombre de jours de charge.

La courbe A correspond à un accumulateur alcalin ouvert de l'art antérieur dont le séparateur est constitué d'une membrane microporeuse non greffée disposée entre deux couches de polyoléfine de structure fibreuse.

La courbe B correspond à un accumulateur alcalin ouvert selon l'invention dont le séparateur comprend une membrane microporeuse, greffée par voie d'activation par rayonnement UV, et disposée entre deux couches de polyoléfine de structure fibreuse.

La courbe C correspond à un accumulateur alcalin ouvert ne faisant pas partie de l'invention et dont le séparateur comprend une membrane dense, greffée par voie d'activation par irradiation au cobalt, et disposée entre deux couches de polyoléfine de structure fibreuse.

### EXPOSE DETAILLE DES MODES DE REALISATION DE L'INVENTION

L'électrode positive de l'accumulateur comprend une matière électrochimiquement active qui est en général principalement un hydroxyde de nickel Ni(OH)₂, et éventuellement un ou plusieurs hydroxydes d'autres composés tels que Zn, Co, Ca, Cd, Mg, Mn, Al, etc. qui sont syncristallisés avec l'hydroxyde de nickel.

L'électrode négative de l'accumulateur comprend une matière électrochimiquement active qui peut être du cadmium métallique pour un accumulateur nickel cadmium ou un composé intermétallique hydrurable de type AB₅, de type AB₂ ou de type ABₜ avec 3,2≤t≤3,5 ou tout matériau classique dans l'art.

L'électrolyte est une solution aqueuse alcaline concentrée comprenant au moins un hydroxyde (KOH, NaOH, LiOH), en une concentration généralement plusieurs fois molaire.

La membrane microporeuse est en polyoléfine par exemple en polyéthylène ou en polypropylène, de préférence en polypropylène. Son épaisseur totale est comprise de préférence entre 10 µm et 50 µm. Elle comporte des pores de diamètre compris de préférence entre 0,1 µm et 1 µm.

Un monomère à insaturation éthylènique est greffé sur ladite polyoléfine. Le greffage peut être activé soit par irradiation à l'aide d'une bombe au cobalt radioactif émettant des rayons γ, soit par un rayonnement ultra-violet (UV). Le procédé par rayonnement UV est préféré au procédé par irradiation car d'une part, le procédé par irradiation est complexe à mettre en oeuvre et d'autre part, les membranes de polymères greffées par activation par rayonnement UV présentent des performances satisfaisantes aux très basses températures (inférieures à -30°C). On pourra se reporter par exemple aux documents US 3,427,206, FR-A-2 489 598, FR-A-2 267 330, FR-A-2 200 305 et FR-A-2 399 134 et Journal of Applied Polymer Science, vol.30, 1023-1033 (1985) pour davantage de précisions sur les conditions expérimentales de mise en oeuvre du procédé d'activation par irradiation.

Le procédé d'activation du greffage du monomère par rayonnement UV comprend les étapes connues de l'homme de métier consistant à :
a) imprégner une membrane microporeuse de polyoléfine par une solution du monomère à insaturation éthylénique,
b) exposer la membrane imprégnée à une radiation ultra-violet dans une atmosphère sans oxygène.

Les monomères à insaturation éthylènique peuvent être des acides carboxyliques et leurs esters tels que l'acide acrylique, l'acide méthacrylique, l'acrylate de méthyle et le méthylméthacrylate. L'acide acrylique est préféré. D'autres monomères vinyliques peuvent aussi être utilisés tels que l'acrylamide, la vinyl pyridine, la vinyl-pyrrolidone et l'acide styrène-sulfonique.

Le solvant de la solution de monomère est choisi de façon à ne pas s'évaporer de façon significative lors de l'étape b) de l'émission du rayonnement UV. Le solvant peut être par exemple de l'eau.

La solution de monomère peut éventuellement contenir un inhibiteur d'homopolymérisation pour éviter l'homopolymérisation du monomère à insaturation éthylènique. Un inhibiteur de polymérisation peut être par exemple un sel de cuivre (II) ou un sel de fer (II).

La solution de monomère peut aussi contenir un agent tensio-actif de façon à améliorer les propriétés mouillantes de la solution de monomère.

Après exposition de la membrane au rayonnement UV, celle-ci est lavée à l'eau désionisée afin d'éliminer les réactifs n'ayant pas réagi et l'acide acrylique homopolymérisé qui a pu se former. La membrane greffée est ensuite séchée.

On pourra se reporter par exemple aux documents WO 93/01622 et WO 2004/020730 pour davantage de précisions sur les conditions expérimentales de mise en oeuvre du procédé d'activation par rayonnement UV.

La membrane greffée est placée entre au moins deux couches de polyoléfine de structure fibreuse pour former un séparateur, de préférence entre deux couches de polyoléfine de structure fibreuse. Elle est placée hors de contact des électrodes positives et négatives. Les couches de polyoléfine placées de part et d'autre de la membrane greffée peuvent être en polyamide ou polyoléfine.

Le séparateur (6) est donc constitué d'au moins 3 couches dont l'une, ladite membrane microporeuse greffée, confère à l'accumulateur une aptitude à une utilisation prolongée en charge sous une tension constante. En effet, le procédé de charge le plus répandu pour ce type d'accumulateurs consiste en :
a) une charge à courant constant en début de charge suivie
b) d'une charge à tension constante en fin de charge quand la tension de l'accumulateur atteint une valeur palier définie.

L'accumulateur selon l'invention est donc bien adapté à fonctionner au cours de l'étape b) du procédé de charge.

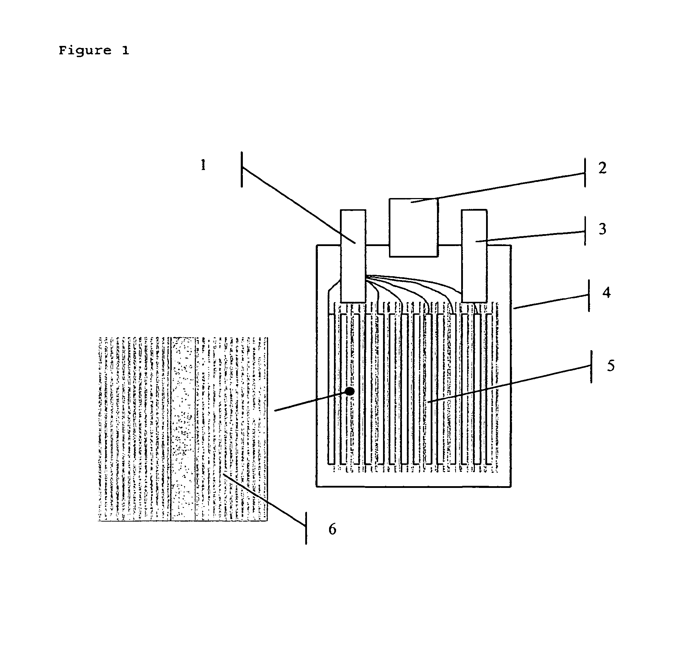

On fabrique par exemple les électrodes positives et négatives en déposant les matières actives positives et négatives sur des collecteurs de courant plans. On superpose au moins une électrode négative, un séparateur et une électrode positive pour former le faisceau électrochimique (5). Ce faisceau est introduit dans un boîtier en plastique de format parallélépipédique ou (prismatique) (4). On relie électriquement les électrodes positives et négatives aux bornes de sortie de courant positives (1) et négatives (3) respectivement. Le boîtier est rempli d'électrolyte puis fermé par un couvercle de façon non étanche. Ce couvercle peut présenter un bouchon de sécurité (2). La figure 1 représente une vue schématique en coupe transversale d'un accumulateur alcalin ouvert selon l'invention.

L'accumulateur contient un excès d'électrolyte, c'est-à-dire que le faisceau électrochimique est complètement immergé dans l'électrolyte. Le boîtier est rempli d'électrolyte de manière à ce que le niveau de l'électrolyte dépasse du sommet des électrodes et des séparateurs. L'invention ne concerne pas à un accumulateur étanche (ou fermé) comportant un défaut d'électrolyte. Dans un accumulateur étanche, une partie des pores du séparateur ne contient pas d'électrolyte. La présence de pores non remplis d'électrolyte permet le passage de l'oxygène à travers le séparateur et la réduction de l'oxygène sur l'électrode négative (ou recombinaison). C'est précisément ce que l'invention cherche à empêcher.

De manière avantageuse, la couche de polyoléfine de structure fibreuse faisant face à l'électrode positive est choisie de façon à ce que ses pores aient un diamètre supérieur au diamètre des pores de la membrane greffée. Par exemple, le diamètre des pores de la couche de polyoléfine de structure fibreuse faisant face à l'électrode positive, est supérieur à 10 µm, par exemple compris entre 10 et 20 µm, et le diamètre des pores de la membrane greffée est inférieur au micron, par exemple compris entre 0,1 et 0,5 µm.

Il est également avantageux de choisir la membrane greffée de façon à ce que ses pores aient un diamètre supérieur au diamètre des pores de la couche de polyoléfine de structure fibreuse faisant face à l'électrode négative. Ainsi, la distribution des tailles de pores dans les trois couches de séparateur suit un ordre décroissant de l'électrode positive vers l'électrode négative.

Le séparateur et la présence d'un électrolyte en excès ont comme effet de faire barrière au passage de l'oxygène à travers le séparateur. On empêche ainsi la migration de l'oxygène dissous, produit par l'électrode positive durant la charge, vers l'électrode négative.

Un avantage directement lié à l'effet de barrière à l'oxygène est d'empêcher la dépolarisation de l'électrode négative. La dépolarisation de l'électrode négative entraîne une charge incomplète de l'accumulateur. Un second avantage lié à l'effet de barrière à l'oxygène est de réduire les risques d'emballement thermique de l'accumulateur. Le mécanisme a été explicité précédemment.

La structure du séparateur de l'accumulateur selon l'invention permet d'éviter le transfert de l'oxygène à travers le séparateur pour empêcher un emballement thermique. Cette structure permet également au séparateur de conserver de façon stable sa propriété de barrière au transfert de l'oxygène gazeux pour empêcher un emballement thermique.L'accumulateur selon l'invention est particulièrement bien adapté comme source d'énergie pour de préférence les applications aéronautiques, les applications industrielles ou dans les télécommunications.

D'autres caractéristiques et avantages de la présente invention apparaîtront à la lecture des exemples.

### EXEMPLES

Trois accumulateurs alcalins ouverts A, B et C ont été assemblés et testés.

L'accumulateur A de l'art antérieur comprend un séparateur constitué d'une membrane microporeuse non greffée disposée entre deux couches de polyoléfine de structure fibreuse.

L'accumulateur B selon l'invention comprend une membrane microporeuse de polypropylène, greffée par voie d'activation par rayonnement UV, et disposée entre deux couches de polyoléfine de structure fibreuse. La membrane greffée est fabriquée par greffage à l'acide acrylique par voie UV à partir du film 2400 disponible commercialement auprès de la Société Celgard.

L'accumulateur C, ne faisant pas partie de l'invention, comprend une membrane dense de polyéthylène, greffée par l'acide acrylique par voie d'activation par irradiation au cobalt, et disposée entre deux couches de polyoléfine de structure fibreuse.

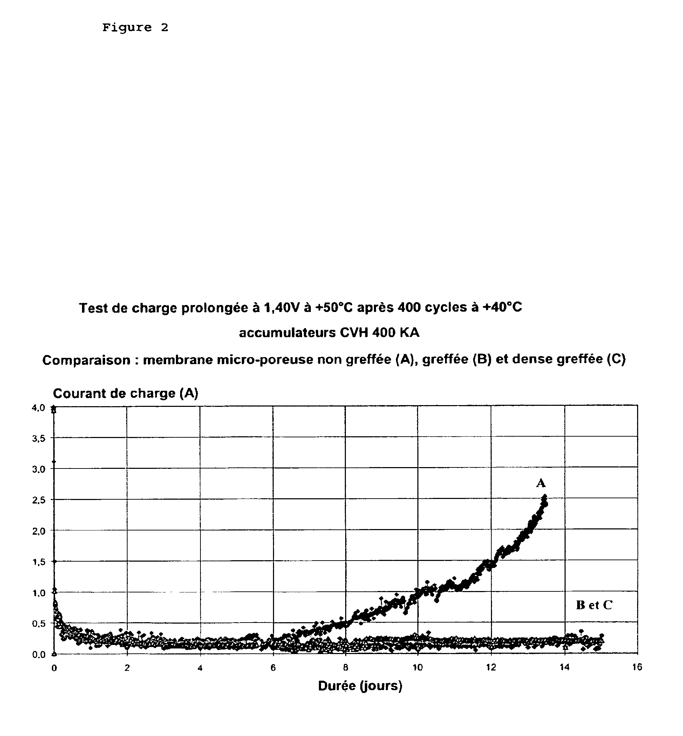

Les accumulateurs A, B et C ont d'abord subi 400 cycles de charge-décharge à une température de 40°C puis ils ont été chargés à la tension constante de 1,40 V à la température de 50°C. Ils ont été maintenus à l'état surchargé sous 1,40 V pendant plusieurs jours à 50°C. La variation du courant de charge a été mesurée en fonction du nombre de jours de charge. Cette variation est représentée figure 2.

Le courant de charge de l'accumulateur A est d'environ 0,25 A jusqu'au 6^{ème} jour de charge, puis augmente à partir du 6^{ème} jour pour atteindre 2,5 A au 13^{ème} jour. L'augmentation du courant de charge au 6^{ème} jour s'explique par une dégradation de la propriété du séparateur de faire barrière à l'oxygène. La charge de l'accumulateur A a du être arrêtée au 13^{ème} jour pour éviter le début de l'emballement thermique.

En effet, pour un courant de charge de 2,5 A et une tension de charge de 1,40 V, l'accumulateur dissipe une puissance calorifique de 3,5 W. Sachant que la masse d'un accumulateur de test est d'environ 1 kg et que sa capacité calorifique massique est de 1,25 J/g/°C, on en déduit que l'élévation de température de l'accumulateur est d'environ 10°C/h. Dans de telles conditions, la charge doit être interrompue sous peine de détruire l'accumulateur.

Au contraire, le courant de charge des accumulateurs B et C reste constant à environ 0,25 A après 15 jours de charge à tension constante. Les accumulateurs B et C peuvent donc fonctionner en charge à tension constante pendant une durée prolongée. Le séparateur des accumulateurs B et C fait barrière à l'oxygène gazeux.

Le présent mode de réalisation et les figures doivent être considérés comme ayant été présentés à titre illustratif et non restrictif, et l'invention n'est pas censée être limitée aux détails fournis ici mais peut être modifiée en restant dans le cadre de la portée des revendications annexées.

## Revendications

1. Accumulateur ouvert de type nickel cadmium ou nickel métal hydrure comprenant un électrolyte, au moins une électrode positive, au moins une électrode négative et au moins un séparateur, ledit séparateur comprenant une membrane microporeuse de polyoléfine, greffée par un monomère à insaturation éthylénique, et de part et d'autre de ladite membrane, au moins une couche de polyoléfine de structure fibreuse.

2. Accumulateur ouvert selon la revendication 1, dans lequel l'électrolyte est en excès.

3. Accumulateur ouvert selon l'une des revendications précédentes, dans lequel la membrane microporeuse de polyoléfine est placée entre deux couches de polyoléfine de structure fibreuse.

4. Accumulateur ouvert selon la revendication 3, dans lequel le diamètre des pores de la couche de polyoléfine de structure fibreuse faisant face à l'électrode positive est supérieur au diamètre des pores de la membrane greffée.

5. Accumulateur ouvert selon la revendication 4, dans lequel le diamètre des pores de la couche de polyoléfine de structure fibreuse faisant face à l'électrode positive, est supérieur à 10 µm, et le diamètre des pores de la membrane greffée est inférieur au micron.

6. Accumulateur ouvert selon la revendication 5, dans lequel le diamètre des pores de la membrane greffée est compris entre 0,1 µm et 1 µm.

7. Accumulateur ouvert selon l'une des revendications 3 à 6, dans lequel les pores de la membrane greffée ont un diamètre supérieur au diamètre des pores de la couche de polyoléfine de structure fibreuse faisant face à l'électrode négative.

8. Accumulateur ouvert selon l'une des revendications précédentes, dans lequel le monomère à insaturation éthylénique est un acide carboxylique.

9. Accumulateur ouvert selon la revendication 8, dans lequel l'acide carboxylique est l'acide acrylique,

10. Accumulateur ouvert selon l'une des revendications précédentes, dans lequel la polyoléfine est du polyéthylène ou du polypropylène, de préférence du polypropylène,

11. Accumulateur ouvert selon l'une des revendications précédentes, dans lequel l'épaisseur de la membrane est comprise entre 10 µm et 50 µm.

12. Accumulateur ouvert selon l'une des revendications précédentes, dans lequel le greffage de la polyoléfine a été activé par un rayonnement UV,

13. Utilisation d'une membrane microporeuse de polyoléfine greffée par un monomère à insaturation éthylénique, et de part et d'autre de ladite membrane, au moins une couche de polyoléfine de structure fibreuse, dans un accumulateur ouvert de type nickel cadmium ou nickel métal hydrure pour faire barrière à l'oxygène gazeux.

## Claims

1. An open accumulator of the nickel cadmium or nickel metal hydride type comprising an electrolyte, at least one positive electrode, at least one negative electrode and at least one separator, said separator comprising a microporous membrane of polyolefin grafted with an ethylenically unsaturated monomer, and on either side of said membrane, at least one layer of polyolefin with a fibrous structure.

2. The open accumulator according to claim 1, wherein the electrolyte is in excess.

3. The open accumulator according to any one of the preceding claims, wherein the microporous polyolefin membrane is placed between two layers of polyolefin with a fibrous structure.

4. The open accumulator according to claim 3, wherein the diameter of the pores of the polyolefin layer with a fibrous structure, facing the positive electrode, is larger than the diameter of the pores of the grafted membrane.

5. The open accumulator according to claim 4, wherein the diameter of the pores of the polyolefin layer with a fibrous structure facing the positive electrode, is larger than 10 µm, and the diameter of the pores of the grafted membrane is less than a micron.

6. The open accumulator according to claim 5, wherein the diameter of the pores of the grafted membrane is between 0,1 µm and 1 µm.

7. The open accumulator according to one of claims 3 to 6, wherein the pores of the grafted membrane have a diameter larger than the diameter of the pores of the polyolefin layer with a fibrous structure facing the negative electrode.

8. The open accumulator according to any one of the preceding claims, wherein the ethylenically unsaturated monomer is a carboxylic acid.

9. The open accumulator according to claim 8, wherein the carboxylic acid is acrylic acid.

10. The open accumulator according to any one of the preceding claims, wherein the polyolefin is polyethylene or polypropylene, preferably polypropylene.

11. The open accumulator according to any one of the preceding claims, wherein the thickness of the membrane is between 10 µm and 50 µm.

12. The open accumulator according to any one of the preceding claims, wherein the grafting of the polyolefin was activated with UV radiation.

13. The use of a microporous membrane of polyolefin grafted with an ethylenically unsaturated monomer, and on either side of said membrane, at least one layer of polyolefin with a fibrous structure, in an open accumulator of the nickel cadmium or nickel metal hydride type, in order to form a barrier to oxygen gas.

## Patentansprüche

1. Offener Akkumulator vom Typ Nickel-Cadmium oder Nickel-Metallhydrid, umfassend einen Elektrolyten, mindestens eine positive Elektrode, mindestens eine negative Elektrode und mindestens einen Separator, wobei der Separator eine mikroporöse Polyolefinmembran umfasst, die mit einem ethylenisch ungesättigten Monomer gepfropft ist, sowie mindestens eine Polyolefinschicht fasriger Struktur zu beiden Seiten der Membran.

2. Offener Akkumulator nach Anspruch 1, wobei der Elektrolyt im Überschuss ist.

3. Offener Akkumulator nach einem der vorangegangenen Ansprüche, wobei die mikroporöse Polyolefinmembran zwischen zwei Polyolefinschichten fasriger Struktur angeordnet ist.

4. Offener Akkumulator nach Anspruch 3, wobei der Durchmesser der Poren der Polyolefinschicht fasriger Struktur, die der positiven Elektrode gegenüberliegt, größer als der Durchmesser der Poren der gepfropften Membran ist.

5. Offener Akkumulator nach Anspruch 4, wobei der Durchmesser der Poren der Polyolefinschicht fasriger Struktur, die der positiven Elektrode gegenüberliegt, größer als 10 µm ist und der Durchmesser der Poren der gepfropften Membran kleiner als ein Mikron ist.

6. Offener Akkumulator nach Anspruch 5, wobei der Durchmesser der Poren der gepfropften Membran zwischen 0,1 µm und 1 µm beträgt.

7. Offener Akkumulator nach einem der Ansprüche 3 bis 6, wobei die Poren der gepfropften Membran einen Durchmesser aufweisen, der größer ist als der Durchmesser der Poren der Polyolefinschicht fasriger Struktur, die der negativen Elektrode gegenüberliegt.

8. Offener Akkumulator nach einem der vorangegangenen Ansprüche, wobei das ethylenisch ungesättigte Monomer eine Carbonsäure ist.

9. Offener Akkumulator nach Anspruch 8, wobei die Carbonsäure Acrylsäure ist.

10. Offener Akkumulator nach einem der vorangegangenen Ansprüche, wobei das Polyolefin Polyethylen oder Polypropylen, vorzugsweise Polypropylen, ist.

11. Offener Akkumulator nach einem der vorangegangenen Ansprüche, wobei die Dicke der Membran zwischen 10 µm und 50 µm beträgt.

12. Offener Akkumulator nach einem der vorangegangenen Ansprüche, wobei das Pfropfen des Polyolefins durch UV-Strahlung aktiviert wurde.

13. Verwendung einer mikroporösen Polyolefinmembran, die mit einem ethylenisch ungesättigten Monomer gepfropft ist, sowie mindestens einer Polyolefinschicht fasriger Struktur zu beiden Seiten der Membran in einem offenen Akkumulator vom Typ Nickel-Cadmium oder Nickel-Metallhydrid, um eine Sperre für gasförmigen Sauerstoff bereitzustellen.
